(19) Europäisches Patentamt European Patent Office Office européen des brevets

(11) **EP 4 625 279 A1**

(12) **EUROPEAN PATENT APPLICATION**

(43) Date of publication:
**01.10.2025 Bulletin 2025/40**

(21) Application number: **24166979.5**

(22) Date of filing: **27.03.2024**

(51) International Patent Classification (IPC):
**G06Q 10/047** (2023.01)   **B60W 60/00** (2020.01)
**G06Q 50/40** (2024.01)   **G08G 1/00** (2006.01)

(52) Cooperative Patent Classification (CPC):
**G06Q 10/047; G06Q 50/40; G08G 1/207**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Autonomous Solutions AB 405 08 Göteborg (SE)**

(72) Inventor: **KOJCHEV, Stefan 431 41 MÖLNDAL (SE)**

(74) Representative: **Kransell & Wennborg KB P.O. Box 2096 403 12 Göteborg (SE)**

Remarks:
•Claims 17,19, 20 are deemed to be abandoned due to non-payment of the claims fees (Rule 45(3) EPC).
•Amended claims in accordance with Rule 137(2) EPC.

(54) **EFFICIENT TRAJECTORY PLANNING FOR A FLEET OF LOADABLE VEHICLES**

(57)   A computer-implemented method of planning routes for a plurality of vehicles operating in a common environment which includes a plurality of mutual exclusion zones, comprising:
obtaining a predefined objective function;
solving a first optimization problem (710) for a first objective function derived from the predefined objective function, to obtain a vehicle crossing order at each mutual exclusion zone, wherein the first optimization problem is subject to safety constraints; and

solving an optimal-control problem (720) for the predefined objective function subject to the obtained vehicle crossing order at the MUTEX zones and subject to the safety constraints, to obtain a control signal for each of the vehicles,
wherein at least some of the vehicles are loadable, and wherein the OCP is constrained by a dynamic vehicle model (721) representing evolution with respect to path length for each vehicle, in which time, path speed and mass are state variables.

Fig. 7

## Description

### TECHNICAL FIELD

The present disclosure relates generally to the field of automatic vehicle control, including the control of autonomous vehicles (AVs). In particular aspects, the disclosure relates to techniques for coordinating the movement of multiple loadable vehicles in an environment with mutually exclusive zones. Specifically, the disclosure addresses the problem of deciding loading and unloading amounts at different loading/unloading zones in such manner that the mission objectives are satisfied. Conflicts between the vehicles in the mutually exclusive zones are resolved by a coordinating entity.

The environment may in particular be a confined area, such as a mining site, logistics center or a port. The disclosure can be applied to heavy-duty vehicles, such as trucks, buses, and construction equipment, among other vehicle types. The disclosure can be applied to loadable vehicles in particular. Although the disclosure may include descriptions and illustrations which refer to a particular vehicle, the applicability of the disclosure is not restricted to any particular vehicle.

### BACKGROUND

It is assumed that AVs are assigned a transport mission in the example form: 'Move a cargo amount of X kg between positions A and B within certain time,' e.g., movement of the cargo starts some time between hours Y1 and Z1 and finishes between hours Y2 and Z2.

AVs operating in a confined site may need to be controlled with a view to so-called mutually exclusive zones or natural exclusion zones (MUTEX zones), which are such that only one vehicle can be present at a given time in each zone. Examples of MUTEX zones are intersections, loading and unloading zones, charging stations, narrow roads, etc. Efficient negotiation of MUTEX zones is a known difficult problem that has received a lot of attention from researchers. To achieve a safe coordination of the vehicles, non-overlapping timeslots which specify when each vehicle can utilize the zone may be defined.

An efficient coordination of all MUTEX zones for all present vehicles thus must be able to find the non-overlapping timeslots and assign them to vehicles, such that the mission goals (transport load, arrival time, energy efficiency, etc.) are satisfied. In the case of a high number of vehicles and MUTEX zones, simple rulesets such as traffic lights have the potential to imply unsatisfactory realization of the mission.

A way of handling MUTEX zones that are safety critical (meaning two or more vehicles could collide) is proposed in the applicant's prior disclosures WO2023072418A1 and EP4198670A1.

The present disclosure aims to propose a method of finding an optimal or near-optimal set of loading and unloading amounts at different zones along a mission path, such that overall performance is improved, while leveraging the per se known methods of handling MUTEX zones for avoiding collisions with other vehicles. Concretely, it is desirable for the method to answer the following questions in relation to a confined site which has a known set of loading/unloading stations and in which a known number of vehicles operate:

1. For each vehicle, what is the best choice of loading/unloading amounts at each station if the overall performance is to improved and potential conflicts with other vehicles are to be avoided?

2. For each loading/unloading zone, what is the best loading/unloading time the vehicles should spend at the zone? This is a nontrivial question. In some cases, the overall performance objective may in fact suggest that a vehicle should stay in the loading/unloading zone some more time after it has finished loading or unloading, namely, to reenter the traffic flow where it has a better safety distance to surrounding vehicles and/or better chances of avoiding sharp avoidance maneuvers and/or can accelerate in better agreement with an energy-optimal trajectory.

3. What is the tradeoff between different performance metrics and/or how can the performance metrics be balanced to satisfy the transport mission goals?

To the inventor's knowledge, no such method where the loading/unloading amounts are optimized is known in the art. This has the following potential implications:

- **Energy waste:** Without appropriate planning, the vehicles may deviate considerably from an energy-optimal trajectory. For example, a vehicle may be programmed with a rule-based behavior which causes it to leave a loading/unloading station as soon as loading/unloading has terminated - even at those times when no subsequent vehicle is queueing at the station - which may force the vehicle out into dense traffic that wastes energy. Energy efficiency is particularly relevant for Battery-Electric Vehicles (BEV), where poor performance leads to more frequent charging stops; charging is nonproductive time from the point of view of the transport mission.

- **Underutilization:** A state-of-the-art route planner may be programmed with a limited efficiency perspective, one which usually does not provide a solution that utilizes the station resources optimally while ensuring that the transport missions of the other vehicles on the site continue to be carried out.

- **Hardware wear:** A state-of-the-art planner, which does not take the loading aspect into account, may cause unnecessary wear on the machinery. Overuse of service brakes in a fully loaded heavy vehicle is an example of such unnecessary wear.

**SUMMARY**

One objective of the present disclosure is to make available improved vehicle route planning techniques which take into account the significant vehicle-mass variations that are caused by loading and unloading. A further objective is to make available such route-planning techniques which enable a more economic completion of a given transport mission than by state-of-the-art route-planning approaches. A further objective is to perform vehicle planning in view of more faithful estimates of the duration of accelerations and decelerations, for thereby scheduling the vehicle movements more reliably and without wasteful extra time margins.

According to a first aspect of the present disclosure, there is proposed a computer system for planning routes for a plurality of vehicles operating in a common environment which includes a plurality of mutual exclusion zones (MUTEX zones), wherein movements of each vehicle are controllable by a control signal. The computer system comprises processing circuitry configured to: obtain a predefined objective function; solve a first optimization problem for a first objective function derived from the predefined objective function, to obtain a vehicle crossing order at each MUTEX zone, wherein the first optimization problem is subject to safety constraints; and solve an optimal-control problem (OCP) for the predefined objective function subject to the obtained vehicle crossing order at the MUTEX zones and subject to the safety constraints, to obtain a control signal for each of the vehicles. According to the first aspect, at least some of the vehicles are loadable, and the OCP is constrained by a dynamic vehicle model representing evolution with respect to path length $s_i$ for each vehicle, in which time $t_i(s_i)$, path speed $v_i(s_i)$ and mass $m_i(s_i)$ are state variables.

The computer system according to the first aspect foresees a specific way of taking into account such vehicle-mass variations that are caused by loading and unloading, namely, by including the current vehicle mass as a state variable in the dynamic vehicle model that constrains the OCP. The current vehicle mass directly influences the inertia of the vehicle, in such manner that the duration of accelerations and decelerations can be predicted faithfully, and hence that vehicle movements are scheduled more reliably and without wasteful extra time margins. A further advantage is that the novel technical features can be integrated in an existing route-planning framework relatively easily.

Optionally in some examples, including in at least one preferred example, the MUTEX zones include at least one loading zone and at least one unloading zone.

Further optionally, a safety constraint for each loading/unloading zone may include a mutual exclusion requirement.

Further optionally, a loading/unloading amount at each loading/unloading zone is a decision variable of the first optimization problem.

Further optionally, an absorption time at each loading/unloading zone is a decision variable of the first optimization problem.

Further optionally, the OCP is constrained by the loading/unloading amount and/or the absorption time per loading/unloading zone decided by the first optimization problem.

Optionally in some examples, including in at least one preferred example, the predefined objective function includes at least one component representing operational cost and at least one component representing productivity. This may lead to more economic completion of a given transport mission.

Further optionally, the predefined objective function includes at least one component representing mass-dependent operational cost.

Optionally in some examples, including in at least one preferred example, the first objective function is a parametric local optimum of the predefined objective function, wherein the parametric local optimum is parametrized by tentative MUTEX entry and MUTEX exit times, wherein the tentative MUTEX entry and MUTEX exit times are decision variables in the first optimization problem.

Optionally in some examples, including in at least one preferred example, the first objective function is a quadratic approximation of the predefined objective function, wherein pairwise relative vehicle crossing orders (b) as well as a state trajectory and control signal for each of the vehicles (W) are decision variables of the first optimization problem.

Optionally in some examples, including in at least one preferred example, the MUTEX zones include at least one of: an intersection zone, a dwelling zone, a merge-split zone. In this connection, a safety constraint for an intersection zone or a dwelling zone includes a mutual exclusion requirement, and a safety constraint for a merge-split zone includes a minimum longitudinal spacing requirement.

Optionally in some examples, including in at least one preferred example, each loadable vehicle has a payload of at least 20% of its gross weight, such as at least 30% of its gross weight, such as at least 40% of its gross weight, such as at least 50% of its gross weight.

Optionally in some examples, including in at least one preferred example, the OCP is a model-predictive control (MPC) problem.

Optionally in some examples, including in at least one preferred example, the first optimization problem is solved as a mixed-integer quadratic program (MIQP).

Optionally in some examples, including in at least one preferred example, the common environment is a confined area with no other traffic participants than said vehicles.

In a second aspect of the present disclosure, there is provided a vehicle comprising the computer system of the first aspect.

In a third aspect, there is provided a computer-implemented method of planning routes for a plurality of vehicles operating in a common environment which includes a plurality of MUTEX zones. The method includes: obtaining, by processing circuitry of a computer system, a predefined objective function; solving, by the processing circuitry, a first optimization problem for a first objective function derived from the predefined objective function, to obtain a vehicle crossing order at each MUTEX zone, wherein the first optimization problem is subject to safety constraints; and solving, by the processing circuitry, an OCP for the predefined objective function subject to the obtained vehicle crossing order at the MUTEX zones and subject to the safety constraints, to obtain a control signal for each of the vehicles. Similar to the first aspect, it is provided that at least some of the vehicles are loadable, and that the OCP is constrained by a dynamic vehicle model representing evolution with respect to path length $s_i$ for each vehicle, in which time $t_i(s_i)$, path speed $v_i(s_i)$ and mass $m_i(s_i)$ are state variables

This disclosure further relates to a computer program containing instructions for causing a computer system to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

The above vehicle, method and computer program generally share the effects and advantages of the compute system according to the first aspect, and they can be implemented with a corresponding degree of technical variation.

The term "path length" refers to the vehicle's position constrained to a predefined path. As such, even though the vehicle is designed for two-dimensional motion, the path length is a one-dimensional quantity, which can be represented, e.g., as the distance $s_i$ from a reference point on the path. Similarly, path speed $v_i$ can be understood as the time derivative of the path length.

The term "route" may refer to a representation indicating a vehicle's position (e.g., a point in space) at different times. A "path" may refer to the set of positions that a vehicle has traversed or will traverse, without indicating when this occurred or will occur. As such, a route may be considered to be a function from time to space, whereas a path is a static quantity.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

Embodiments of the disclosed invention may enable one or more of the following:

- Incorporate the loading/unloading possibility of the vehicle through the vehicle dynamics.

- Incorporate the loading/unloading MUTEX zones.

- Design an algorithm that determines the amount of vehicle mass change which is needed at each loading/unloading station and the time for which the vehicle is absorbed (i.e., dwells) at the zone.

- State explicit performance objectives and determine how these should be traded off against each other.

- State explicit system constraints, e.g., individual transport mission deadlines, cargo to deliver, speed and acceleration limits etc.

- Include explicit safety constraints with tunable margins.

- Incorporate physical constraints and effects, e.g., the vehicle dynamics and propulsion system efficiency, including the effect increased energy consumption induced by uphill driving, or leverage the potential energy during a steep descent.

- Introduce explicit priorities among the vehicles, in a way that considers vehicle state and transport mission.

- Introduce feedback: the traffic plan can be recomputed at a high rate to handle deviations from the current plan.

- Flexibility in tuning: all of the above can be changed at runtime, leading to situations where the overall system behavior can be changed at will, e.g., changing prioritization between throughput and energy efficiency depending on customer needs/wishes.

## BRIEF DESCRIPTION OF THE DRAWINGS

Aspects and embodiments are now described, by way of example, with reference to the accompanying drawings.

Figure 1 are top views of three types of MUTEX zones, namely, an intersection zone (figure 1A), a merge-split zone (figure 1B) and a narrow road section (figure 1C).

Figures 2 and 3 illustrate example scenarios with three vehicles and multiple loading (L) and unloading (UL) zones.

Figure 4 shows example loadable vehicles.

Figure 5 is an example velocity profile showing a vehicle's entry into a loading zone, wherein the vehicle is slowed down to a minimum speed.

Figure 6 is an example time evolution, as a function of path distance, for a vehicle which has stopped at a loading zone.

Figure 7 illustrates information flows in an example embodiment of the computer system according to the first aspect of the present disclosure.

Figure 8 is a flowchart of a vehicle route planning method according to embodiments herein.

Figure 9 shows an environment with multiple intersection zones, merge-split zones and dwelling-type zones, in which a plurality of vehicles operates, as well as a device suitable for controlling said vehicles is deployed. The loading/unloading zones may be modeled as dwelling-type zones.

Figure 10 is a sequence diagram showing an exchange of signals between a vehicle and a device configured to control a group (fleet) of vehicles to which the vehicle belongs. It is understood that a corresponding exchange of signals with each vehicle in said group takes place.

Figure 11 is a schematic diagram of a computer system suitable for implementing the teachings disclosed herein.

## DETAILED DESCRIPTION

The detailed description set forth below provides information and examples of the disclosed technology with sufficient detail to enable those skilled in the art to practice the disclosure.

### Problem formulation

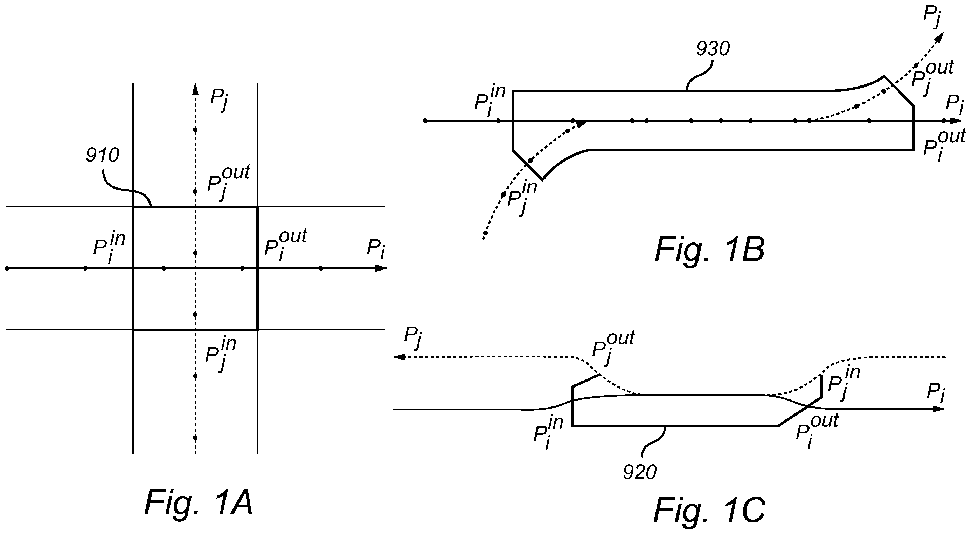

A model used in the theoretical part of this disclosure considers $N_a$ conventional or autonomous vehicles operating on a site. The site may be a confined area, meaning that non-controlled traffic participants such as pedestrians, manually operated vehicles, bicycles etc., are absent or can be neglected without detriment. Furthermore, it is assumed that the paths of all vehicles are known. Additional simplifying assumptions may be that overtakes are prohibited, and that no vehicle reverses. The road network contains mutually exclusive (MUTEX) zones, such as intersections, merge-splits, narrow roads, etc., where simultaneous access must be restricted; see Figure 1. A MUTEX zone may alternatively be referred to as a conflict zone.

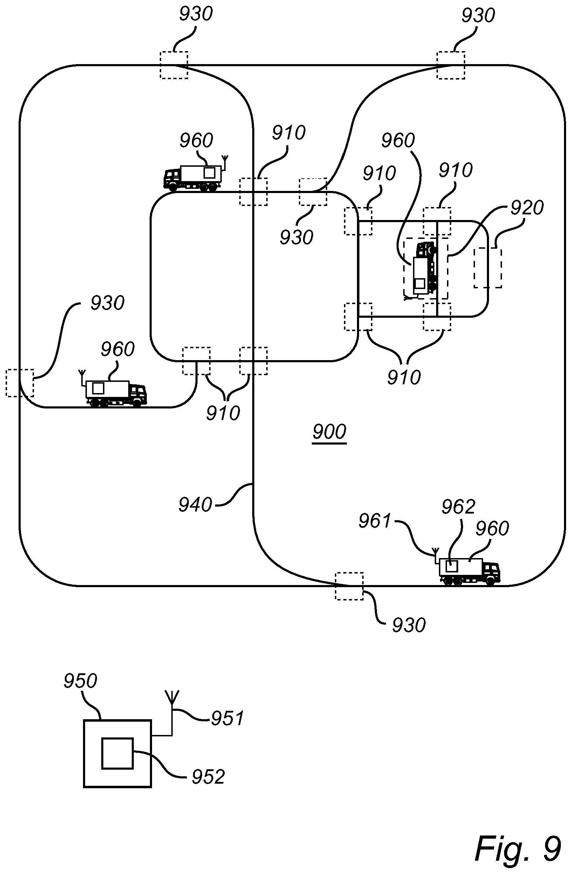

To illustrate, figure 9 shows an environment 900 in which a plurality of vehicles 960 operate. The environment 900 includes roads 940 as well as multiple intersection MUTEX zones 910, dwelling-type MUTEX zones (dwelling zones, including loading and unloading zones) 920 and merge-split MUTEX zones 930. The environment 900 may be a confined area with no other traffic participants than the vehicles 960. The vehicles 960 may be conventional vehicles, partially autonomous vehicles or fully autonomous vehicles. The vehicles may be cars, trucks, buses, construction equipment; they may be single vehicles or multi-unit vehicle combinations. Also visible in figure 9 is a computer system 950 suitable for controlling said vehicles 960. The computer system 950 includes processing circuitry 952 and is configured to communicate over a wireless interface 951 with corresponding wireless interfaces 961 on the vehicles 960. As indicated for one example vehicle 960, the vehicles 960 circulating in the environment 900 may further include vehicle-carried processing circuitry 962.

In the present disclosure, the path planning will be performed on the basis of a further developed version of the path-length based dynamic vehicle model disclosed in EP4198670A1, which is included herein by reference. This model was obtained by substituting

$$\mathrm{d}t = \mathrm{d}s_i / v_i(t)$$

into the classical dynamic model

$$
\begin{aligned}
\dot{s}_i(t) &= v_i(t) \\
\dot{x}_i(t) &= f_i\big(s_i(t), x_i(t), u_i(t)\big) \\
0 &\le h_i\big(s_i(t), x_i(t), u_i(t)\big),
\end{aligned}
\qquad (1,2,3)
$$

where $s_i(t) \in \mathbb{R}$ is the position, $x_i(t) \in \mathbb{R}^n$ the vehicle state, $u_i(t) \in \mathbb{R}^m$ the control input, and i is a vehicle index. The functions $f_i$ and $h_i$ describe respectively the dynamics and constraints that capture, e.g., actuator and speed limits, and both functions are assumed to be smooth. Absence of constraint corresponds to $h_i = 0$. The substitution $dt = ds_i/v_i(t)$ yields the following 'spatial' dynamic model:

$$
\begin{aligned}
\frac{\mathrm{d}t_i}{\mathrm{d}s_i} &= \frac{1}{v_i(s_i)} \\
\frac{\mathrm{d}x_i}{\mathrm{d}s_i} &= \frac{1}{v_i(s_i)} f_i\big(s_i, x_i(s_i), u_i(s_i)\big) \\
0 &\le h(s_i, x_i, u_i),
\end{aligned}
\qquad (4,5,6)
$$

where the position $s_i$ is the independent variable. The position $s_i$ is measured in terms of the path length covered by the vehicle since a reference starting point. Preferably, the vehicles share the reference starting point(s) to the furthest extent possible, so that a MUTEX zone has a unique representation in path length and thus coordination can be carried out without having to convert between different reference starting points. As explained in detail in EP4198670A1, this model advantageously enables an optimization of the trajectories over the full extent of the paths, i.e., without having to determine or guess how much time it takes the vehicles to traverse the paths. Such assumptions are necessary with the classical formulation, where time is the independent variable, and the coordination problem thus difficult to formulate and solve.

In the present disclosure, the dynamic model (4,5,6) is further developed by adding mass as a state variable. More precisely, for each of the $N_a$ vehicles that is a loadable vehicle, it is proposed to add a state $m_i(s_i)$ representing the $i$th vehicle's mass as a function of the $i$th vehicle's position $s_i$, which is the independent variable of the dynamic model:

$$\frac{\mathrm{d}t_i}{\mathrm{d}s_i} = \frac{1}{v_i(s_i)}$$
$$\frac{\mathrm{d}x_i}{\mathrm{d}s_i} = \frac{1}{v_i(p_i)m_i(s_i)} f_i\big(s_i, x_i(s_i), u_i(s_i)\big) \qquad (D)$$
$$\frac{\mathrm{d}m_i}{\mathrm{d}s_i} = \Delta m_i(s_i)$$
$$0 \le h(s_i, x_i, u_i),$$

Alternatively, the second sub-equation can be formulated in terms of the position derivative of the velocity $v_i$:

$$\frac{\mathrm{d}t_i}{\mathrm{d}s_i} = \frac{1}{v_i(s_i)}$$
$$\frac{\mathrm{d}v_i}{\mathrm{d}s_i} = \frac{1}{v_i(p_i)m_i(s_i)}\big(F_{prop}(s_i) - F_d(s_i) - F_r(s_i)\big) \qquad (D')$$
$$\frac{\mathrm{d}m_i}{\mathrm{d}s_i} = \Delta m_i(s_i)$$
$$0 \le h(s_i, x_i, u_i),$$

where $F_{prop}$, $F_d$, $F_r$ denote propulsion force, aerodynamic drag and rolling resistance. The aerodynamic drag and rolling resistance can be modeled as:

$$F_d(v_i, t_i) = \frac{1}{2}\rho A c_a v_i(t_i)^2$$

$$F_r(s_i, t_i) = mg\big(\sin(\theta(s_i)) + c_r \cos(\theta(s_i))\big)$$

where $\rho$ is the air density, A is the frontal area of the vehicle, $c_a$ is the aerodynamic drag coefficient, $c_r$ is the rolling resistance coefficient and $\theta(s_i)$ is the local road gradient at position $s_i$.

To summarize, the state variables of each of the dynamic models $D$, $D'$ are time, velocity and mass. The control variables are propulsion force, change of mass and unloading time.

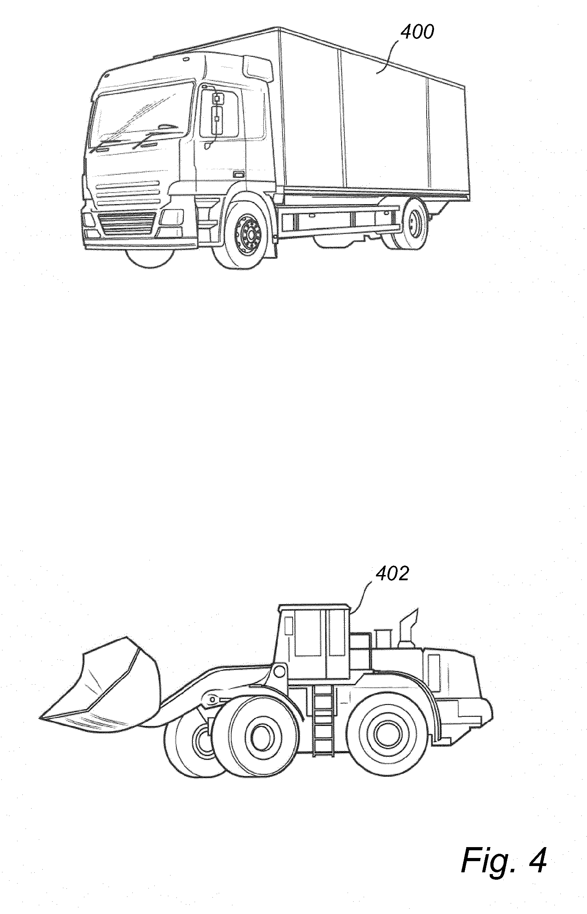

For the purposes of the present disclosure, a vehicle may be considered *loadable* if it has a payload of at least 20% of its gross weight, such as at least 30% of its gross weight, such as at least 40% of its gross weight, such as at least 50% of its gross weight. The applicable limit percentage may be set in view of the available computational resources. Indeed, it may be considered that those vehicles which have a smaller payload than the limit percentage do not justify the additional computational effort but can be adequately modeled by a dynamic model which assumes a fixed mass, such as the dynamic model (4,5,6). Examples of heavy loadable vehicles are found in figure 4, which illustrates a truck 400 and a construction equipment vehicle 402.

## Coordination Problem

Conceptually, the problem of finding the optimal vehicle trajectories that avoid collision is to

minimize operational cost and maximize productivity subject to vehicle dynamics,

vehicle constraints,

collision-avoidance constraints,

loading/unloading constraints.

Here, the vehicle constraints capture the physical limitations of the vehicle, while the collision avoidance constraints ensure the safe utilization of the MUTEX zones by the involved vehicles. Using a vehicle model as the one defined above, one could easily include electric vehicles where the propulsion force will result from the electric machine. It is oftentimes a prioritized performance goal to improve (reduce) the energy consumption.

In mathematical language, this can be stated as follows. **Problem 1 (Coordination Problem):** Obtain the optimal state and control trajectories $\mathcal{X}^* = \{x_1^*, \dots x_{N_a}^*\}, \mathcal{U}^* = \{u_1^*, \dots u_{N_a}^*\}$, given the initial state $X_0 = \{x_{1,0}, \dots x_{Na,0}\}$, by solving the optimization problem:

$$\min_{x_i, u_i, \mathcal{O}} \sum_{i=1}^{N_a} J_i(x_i, u_i) \qquad (11a)$$

$$\text{subject to } \text{initial states } x_{i,0} = \hat{x}_{i,0} \qquad (11b)$$

$$\text{system dynamics} \qquad (11c)$$

$$\text{state and input constraints} \qquad (11d)$$

$$\text{safety constraints.} \qquad (11e)$$

where $J_i(x_i, u_i)$ is an objective function (cost function), $\mathcal{O}$ is the order in which the vehicles enter all MUTEX zones in the site. The objective function depends on state and control trajectories for each vehicle

$$x_i = \left(x_{i,0}, x_{i,1}, \dots\right)$$

$$u_i = \left(u_{i,0}, u_{i,1}, \dots\right)$$

where i = 1, ... , $N_a$. The objective function may be a predefined objective function derived from a vehicle model. The objective function may include at least one component representing operational cost - especially mass-dependent operational cost - and at least one component representing productivity. More precisely, it may include cost terms representing the energy consumption, expected wear, expected service needs, etc. incurred by the vehicles' movements and positions, and possibly amplified by the vehicle's sometimes lower, sometimes higher mass.

The safety constraints in this problem relate to the collision-free occupancy of the MUTEX zones. The constraints (11b)-(11e) apply for all vehicles, hence, for all values of the index *i*. The dynamic model *D* or *D'* can be applied as the system dynamics constraint (11c).

In one example, the Coordination Problem can be stated as follows:

$$\begin{aligned} \min_{\mathcal{W}, b} \quad & J(\mathcal{W}) \\ \text{s.t.} \quad & g(\mathcal{W}) = 0 \\ & h(\mathcal{W}) \leq 0 \\ & c(\mathcal{W}, b) \leq 0 \end{aligned} \qquad (12)$$

where $\mathcal{W} = \{\mathcal{X}, \mathcal{U}\}$, $J(\mathcal{W}) = \sum_{i=1}^{N_a} J_i(w_i)$, $g(\mathcal{W})$, $h(\mathcal{W})$ gather all equality and inequality constraints, and c($\mathcal{W}, b$) = $c_w(\mathcal{W})$ + Cb are the integer constraints for the combinatorial part of the problem with C a matrix that captures the influence of the integer variables. A quadratic approximation of (12) can be provided in a similar fashion as QP sub-problems are formed in SQP methods. In essence, (12) can be reformulated as:

$$\min_{\mathcal{W},b} \frac{1}{2} \begin{bmatrix} \Delta\mathcal{W} \\ b \end{bmatrix}^T \boldsymbol{H}(\mathcal{W},\lambda,\mu) \begin{bmatrix} \Delta\mathcal{W} \\ b \end{bmatrix} + \nabla_{\mathcal{W}} J(\mathcal{W})^T \begin{bmatrix} \Delta\mathcal{W} \\ b \end{bmatrix} + J(\mathcal{W}^{**}) \qquad (13a)$$

$$\text{s.t.} \quad g(\mathcal{W}^{**}) + \nabla_{\mathcal{W}} g(\mathcal{W}^{**})^T \begin{bmatrix} \Delta\mathcal{W} \\ b \end{bmatrix} = 0$$

$$h(\mathcal{W}^{**}) + \nabla_{\mathcal{W}} h(\mathcal{W}^{**})^T \begin{bmatrix} \Delta\mathcal{W} \\ b \end{bmatrix} \leq 0 \qquad (13b)$$

$$c_w(\mathcal{W}^{**}) + \nabla_{\mathcal{W}} c_w(\mathcal{W}^{**})^T \begin{bmatrix} \Delta\mathcal{W} \\ b \end{bmatrix} + Cb \leq 0$$

where

$$\boldsymbol{H}(\mathcal{W},\lambda,\mu) = \text{blkdiag}(\{H_i\}_{i=1}^{N_a}, \boldsymbol{0}_{r_0+w_0, r_0+w_0})$$

is a positive-definite block diagonal matrix with

$$H_i = H_i(w_i, \lambda_i, \mu_i) = \nabla^2_{w_i} \mathcal{L}(w_i, \lambda_i, \mu_i) = \nabla^2_{w_i} J_i(w_i) - \nabla^2_{w_i} \lambda_i^T g(w_i) - \nabla^2_{w_i} \mu_i^T h(w_i),$$

where $\lambda_i$, $\mu_i$ are the dual variables and zeros of appropriate size for the integer variables, and $\Delta\mathcal{W} = \mathcal{W} - \mathcal{W}^{**}$, with a solution guess (solution conjecture) W**. The constant term $J(\mathcal{W}^{**})$ can be discarded. The solution guess $\mathcal{W}^{**}$ can be obtained, for example, by solving the optimization problem (11) without safety constraints (11e), or by a forward simulation of the vehicles with, for example, an LQR controller.

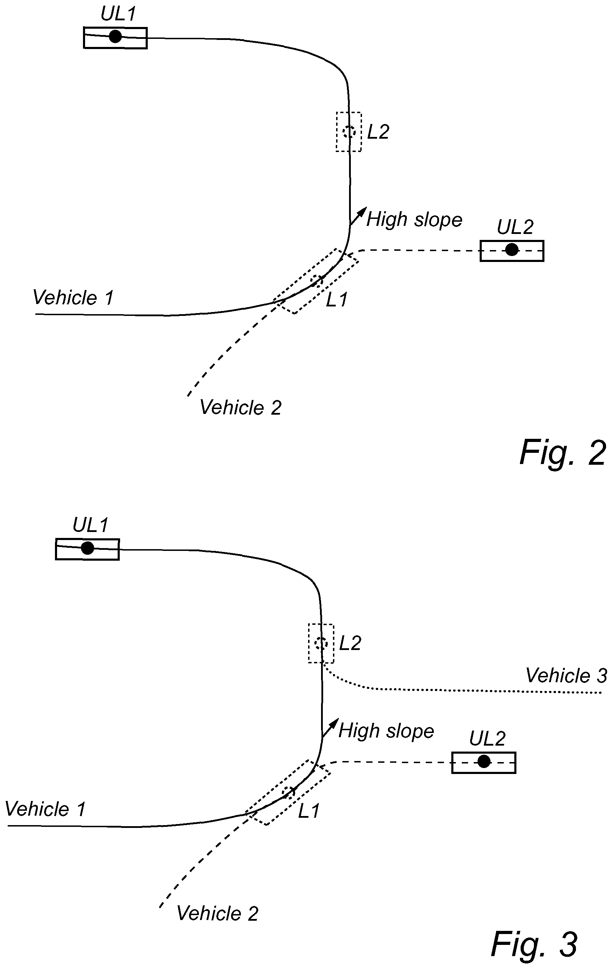

Problem 1 can be stated as a Mixed Integer Nonlinear Program (MINLP), where the crossing order corresponds to the "integer part" and the state and control trajectories corresponds to the "NLP part". However, finding a solution to MINLP problems is known to be difficult, especially when the constraints or the cost function are non-convex. Therefore, a common procedure is to apply an approach where the integer part of the solution is obtained first using a heuristic, and the continuous part of the solution thereafter is obtained by solving the nonlinear program (NLP) that results from fixing the integers to the values found with the heuristic. The approach presented in approximates the integer part of the solution of (11) by solving a Mixed Integer Quadratic Problem (MIQP) resulting in "approximately optimal" crossing order $\hat{\mathcal{O}}$. The MIQP is formed as a quadratic approximation of (11), similarly to how QP sub-problems are formed in SQP methods; see J. Nocedal et al., Numerical optimization, Springer Science & Business Media, 2006. Following the MIQP, a "fixed-order coordination" NLP is solved, i.e., Problem 1 with a fixed crossing order $\mathcal{O} = \hat{\mathcal{O}}$, for obtaining the state and control trajectories. Figure 2 depicts the control structure of the heuristic. The proposed MIQP has an exponential complexity in the decision variables (i.e., amount of MUTEX zones) and the NLP has a cubic complexity in the number of stages, i.e., the sum of $N_a$ vehicles and M stages per vehicle.

**Loading/unloading zone constraints**

Using this framework, the MUTEX zones will be modeled in terms of the entry and exit position $[s_i^{in}, s_i^{out}]$ on the path of each vehicle, where $s_i^{in} < s_i^{out}$ or $s_i^{in} \neq s_i^{out}$. From the known positions, the entry and exit times ($t_i^{in}, t_i^{out}$) at the MUTEX zone can be defined. In the present disclosure, three types of conflict zones are considered as depicted in Figure 1. Let $\mathcal{J} = \{I_1, I_2, \ldots, I_{r_0}\}$ denote a set of all intersections (total number: $r_0$) in the confined site and $\mathcal{Q}_r = \{q_{r,1}, q_{r,2}, \ldots, q_{r,l}\}$ denote the set of vehicles that cross intersection $I_r$.

In the intersection-like and dwelling-type MUTEX zones (figures 1A and 1C), it is desired to only have one vehicle inside the MUTEX zone, i.e., not allowing the vehicle $j$ to enter the MUTEX zone before vehicle $i \neq j$ exits the MUTEX zone, and vice-versa.

To address the merge-split MUTEX zone (figure 1B), let $\mathcal{M} = \{M_1, M_2, \ldots, M_{w_0}\}$ denote a set of all merge-split zones (total number: $w_0$) in the site and $\mathcal{Z}_w$ = {$z_{w,1}$, $z_{w,2}$, ... , $z_{w,h}$} denote the set of vehicles that cross the merge-split MUTEX zone $M_w$. It is desired to have the vehicles in the zone at the same time, instead of blocking the whole zone, and thus increasing throughput efficiency. This requires having rear-end collision constraints once the vehicles have entered the MUTEX zone safely. In this case, the order in which the vehicles enter the zone is denoted as

$$O_w^{\mathcal{M}} = \left( s_{w,1}, s_{w,2}, \ldots, s_{w,|\mathcal{Z}_w|} \right)_{\text{, and}} \quad O^{\mathcal{M}} = \left\{ O_1^{\mathcal{M}}, \ldots, O_w^{\mathcal{M}} \right\}_{\text{.}}$$

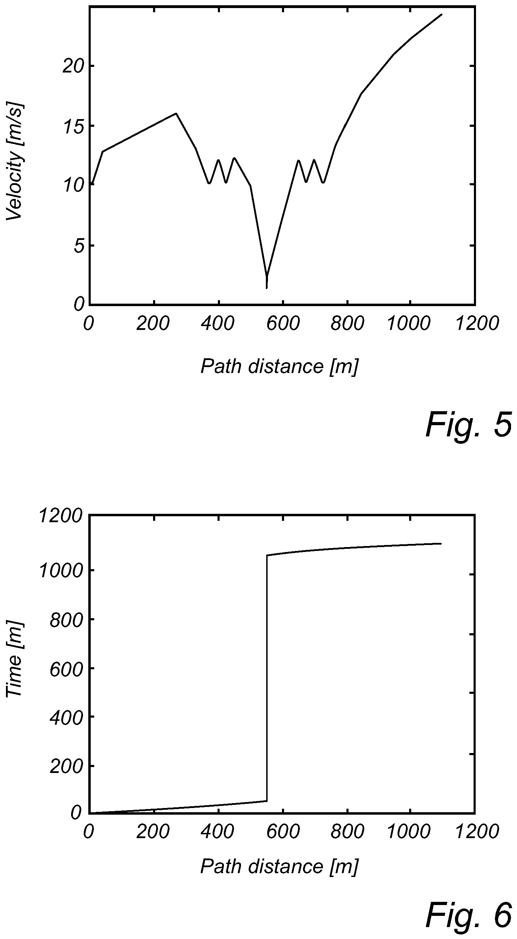

Loading and unloading zones can in principle be modeled as dwelling-type MUTEX zones. In such a zone, more precisely, the vehicle is either being loaded or unloaded which corresponds to a mass change for the vehicle. The change of mass at this zone is one of the system inputs and can be easily constrained to the limitations of the loading/unloading station, such as a limited mass flow per unit time. The change of vehicle mass corresponds to a specific time of loading/unloading that can also be captured in the constraints. Furthermore, the total mass of the vehicle (which is one of the system states) can also be constrained to corresponding mass limits. Figure 5 presents a velocity profile for a vehicle that would need to stop for loading/unloading.

An advantage of using a spatial vehicle model is that the location of the zone is exactly known, and posing these constrains is significantly easier than in the temporal domain. Specifically, let $s_{load}$ be the position of the loading station. As the vehicles need to make a stop at the station, the constraint can be expressed such that the $v(s_{load}) = v_{min}$, and the mass change can be represented as a discrete jump discontinuity:

$$m(s_{load} + \Delta s) = m(s_{load}) + \Delta m$$

where $\Delta s$ corresponds to one position step in a discretized model or to a numerical accuracy ('system epsilon') in a continuous computer-implemented model. Alternatively, the constraint can be expressed as an ideal discontinuity:

$$m(s_{load}^+) = m(s_{load}^-) + \Delta m$$

where $m(s_{load}^-), m(s_{load}^+)$ represent the left and rights limits of $m(s)$ as s $\to$ $s_{load}$.

As a technical point, because of the use of a spatial model, it is not possible to set the velocity at the loading zone equal to zero as this would result in a division by zero in the vehicle model. Thus, the speed is reduced down to a reference minimum value close to zero, so as to imitate a stop; this is illustrated by the finite slope of the middle section of the curve in figure 6. The use of a nonzero reference minimum velocity is a technical necessity resulting from the high-level control scheme discussed above, including the spatial dynamic model. In practice, the vehicles 960 will be tracked and controlled by a low-level controller that is capable of stopping the vehicles to zero velocity when the calculated trajectory indicates the reference minimum velocity.

The loading time that is needed for the action would correspond - using the jump formulation - to the constraint

$$t(s_{load} + \Delta s) = t(s_{load}) + t_{loading}$$

with $t_{loading}$ being zero everywhere and constrained between the desired bounds for the loading zone. In essence, one has

$$\begin{cases} t_{loading} = 0, & \text{if } s \neq s_{load}, \\ t_{load,min}(\Delta m) \leq t_{loading} \leq t_{load,max}(\Delta m), & \text{if } s = s_{load}, \end{cases}$$

with $t_{load,min}(\Delta m)$ denoting the time that is needed for loading/unloading the amount $\Delta m$ that is chosen by the solver, and the $t_{load,max}(\Delta m)$ being an upper bound for the maximum time that the vehicle can be stopped at the station. Similarly, for *unloading* at the station located at $s = s_{load}$, one may set a constraint on the form

$$t(s_{load} + \Delta s) = t(s_{load}) + t_{unloading}$$

with

$$\begin{cases} t_{unloading} = 0, & \text{if } s \neq s_{load}, \\ t_{unload,min}(\Delta m) \leq t_{unloading} \leq t_{unload,max}(\Delta m), & \text{if } s = s_{load}. \end{cases}$$

As those skilled in the art realize, this framework can be used to model not only stations adapted for both loading and unloading, but also for modeling pure loading stations or pure unloading stations.

An example of the loading time effect is illustrated in figure 6, wherein approximately 1000 s elapses during the loading event. In the above-stated Coordination Problem, the state and input constraints (11d) absorb the mass constraints and loading/unloading constraints, including the conditions discussed above.

A coordination problem which is formulated in this manner, where the vehicles spend a variable loading/unloading time at each station rather than a constant loading/unloading time at that station, could result in more efficient conflict resolution. For example, the coordination problem may be solved by a trajectory such that a vehicle is retained at the loading zone for a slightly longer time than strictly necessary for loading/unloading, so as to avoid deviations from a speed profile which is the most energy efficient one for the current mass.

### Solving the Coordination Problem

The stated coordination problem (11) with dynamics $D$ or $D'$ may be expected to be difficult to solve. A heuristic for a similar optimization problem was presented in the applicant's prior disclosure WO2023072418A1, which is included herein by reference; see also Kojchev et al., "A Two-Stage MIQP-Based Optimization Approach for Coordinating Automated Electric Vehicles in Confined Sites", IEEE Transactions on Intelligent Transportation Systems, vol. 25, no. 2 (2024). The problem (11) will be addressed by a similar approach, although both of its components differ markedly from the optimization problem analyzed in WO2023072418A1.

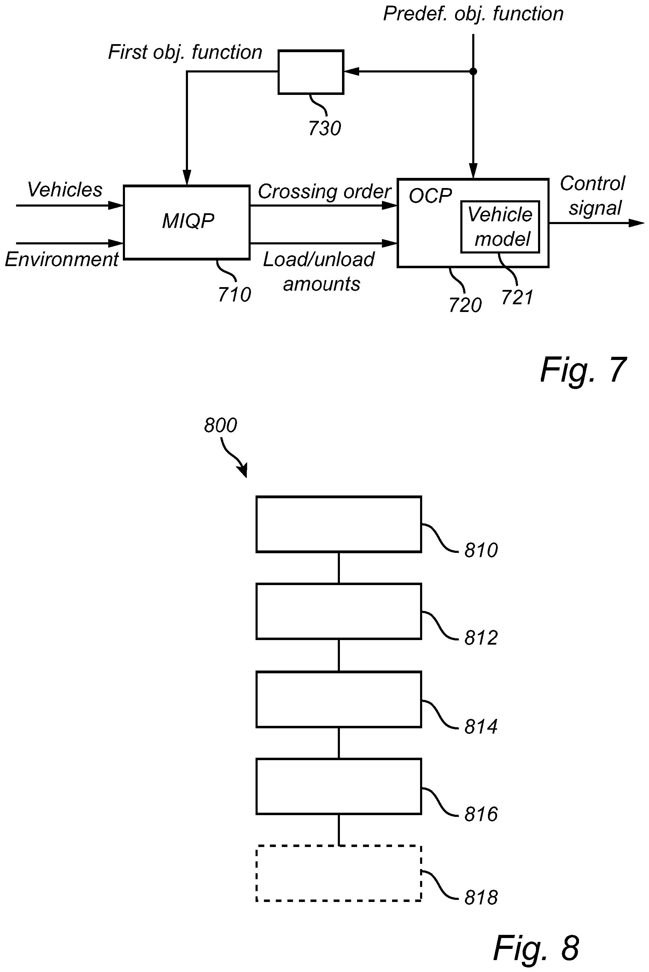

As illustrated in figure 7, when this heuristic is applied to the coordination problem (11) with the predefined objective function $\Sigma_i J_i$, the coordination problem is split into

- a first optimization problem 710 for a first objective function derived from the predefined objective function, to obtain a vehicle crossing order at each MUTEX zone, wherein the first optimization problem is subject to safety constraints; and

- a second optimization problem 720, which is an optimal-control problem (OCP) for the predefined objective function $\Sigma_i J_i$ subject to the obtained vehicle crossing order at the MUTEX zones and subject to the safety constraints, to obtain a control signal for each of the vehicles.

The first optimization problem 710 may be solved as a mixed-integer quadratic program (MIQP). As discussed above and in the prior disclosures, the first objective function may be a parametric local optimum of the predefined objective function, wherein the parametric local optimum is parametrized by tentative MUTEX entry and MUTEX exit times, wherein the tentative MUTEX entry and MUTEX exit times are decision variables in the first optimization problem. Further, as also discussed above, the first objective function may be a quadratic approximation of the predefined objective function, wherein pairwise relative vehicle crossing orders $b$ as well as a state trajectory and control signal for each of the vehicles $\mathcal{W}$ are decision variables of the first optimization problem.

Specific to the mass-dependent formulation of the Coordination Problem proposed herein, the solution of the MIQP 710 will not only determine the occupancy orders (crossing orders) for all MUTEX zones but also determine the loading/unloading amount at each loading/unloading zone, as well as the absorption time at each loading/unloading zone. This means that the loading/unloading amount

per zone and well as the absorption time at each of the loading/unloading zones are a continuous decision variable in the MIQP. Furthermore, the MIQP may also be extended with constraints concerning the loaded and unloaded amounts; this option may be used in order to ensure that the transport mission is accomplished.

As to the second optimization problem 720, the OCP may be constrained by a dynamic vehicle model 721 representing evolution with respect to path length $s_i$ for each vehicle, in which time $t_i(s_i)$, path speed $v_i(s_i)$ and mass $m_i(s_i)$ are state variables; the above models $D, D'$ are examples. The OCP may in particular be a model-predictive control (MPC) problem. The OCP 720, apart from abiding by the order resulting from the MIQP, would also need to stop and hold the vehicles for the obtained absorption time and plan the motion of the vehicles after each mass change $\Delta m$.

### Expected results and examples

By allowing the optimization problem to be aware of vehicle mass and to optimize over the loading/unloading amounts, as well as the time the vehicles should spend at these zones (absorption time), the inventor expects some particular benefits in comparison with a solution that assumes a pre-fixed loading/unloading amount. These include:

- **Improvements in energy efficiency:** Avoiding conflicts in MUTEX zones can now also be achieved by delaying the exit time of the vehicle from the loading/unloading zone. This would result in less deviations from a vehicle's energy-optimal velocity profile as the vehicle is enabled to avoid contemporaneous MUTEX zone occupancy while braking less frequently than with state-of-the-art route planning. This advantage would especially be visible when the vehicles are at full load and on sloping roads.

- **Productivity improvements:** By optimizing the load over multiple stations, the solver can endeavor to make the vehicles arrive at their end destinations with the desired load, i.e., according to the transport mission. If the load is pre-fixed and constant, it could happen that a station is underutilized or overutilized.

- **Reduced hardware wear:** If mechanical wear is included as a cost term in the objective function, the optimal solution will be reached while considering the mass of the vehicles. One effect may be that heavier vehicles generally brake more gently and/or less often.

Figure 2 shows a path of a first vehicle (solid curve) and a path of a second vehicle (dashed curve) which operate on a site with two loading stations L1, L2 and two unloading stations UL1, UL2. It is assumed that a single type of cargo (e.g., a uniform bulk material) is to be loaded and unloaded at all these stations. The road segment between the two loading stations L1, L2 has a markedly steeper slope than the other roads on the site. The slope may be reflected in the definition of the objective function $J$, e.g., by the fact that the operational cost is locally higher when the vehicle drives up the slope.

For this scenario, when route planning that improves energy efficiency and performance is carried out, one may expect to observe a behaviour where the first vehicle loads less from L1 - or skips loading from L1 entirely - while it loads more from L2, all in order to avoid moving with high load on a steeply sloping road. This preference may be visible in the solution provided loading station L2 as sufficient capacity, such that the first vehicle will unload the amount required by the transport mission at the unloading station UL1.

Similarly, if it turns out that the loading capacity of station L1 is sufficient for the second vehicle to load but not the first vehicle, then the first vehicle may skip loading at the loading station L1 and load fully at station L2.

Figure 3 shows paths of a first vehicle (solid curve), second vehicle (dashed curve) and a third vehicle (dotted curve, left portion coinciding with the solid curve), which operate on the just discussed site according to figure 2.

In this scenario, the solver could arrive at a solution by which the first vehicle is retained at loading station L1 (i.e., a control signal is fed to the vehicle which instructs the vehicle to stay at the loading station L1) until the second vehicle is just about to leave the station. This way, the solver relieves the first vehicle from having to stop on a sloped road, which would have serious negative consequences on energy efficiency. The possibility to hold a vehicle longer at a loading/unloading zone than required by the scheduled loading/unloading operation could result in avoiding conflicts in other zones such as intersections, narrow road sections, etc. Narrow road sections in particular typically present a challenge for collision avoidance, as they are long zones where only vehicles from one direction of travel can occupy the zone. Poor coordination of narrow roads is known to result in deadlocks under some circumstances.

## Implementations and performance

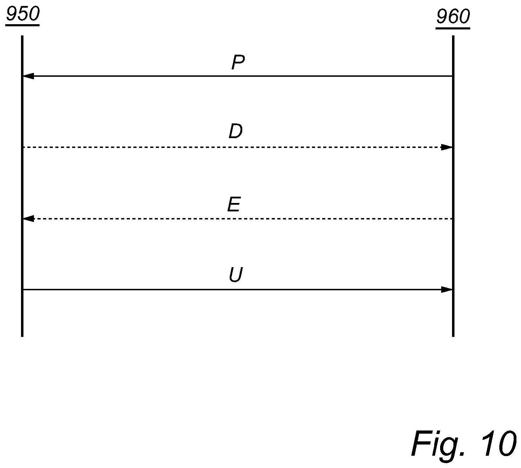

Figure 8 is a flowchart of a computer-implemented method 800 of planning routes for a plurality of vehicles 960 (see figure 9) operating in a common environment 900 which includes a plurality of MUTEX zones 910, 920, 930, wherein movements of an $i^{th}$ vehicle are controllable by a control signal $u_i$. The execution of the method 800 may be coordinated by a central processing resource being either fixedly installed or vehicle-carried. In the following description, by way of example, it will be assumed that the execution of the method 800 is coordinated by processing circuitry 952 in a computer system 950, which may be fixedly installed or movable. The computer system 950 can delegate the execution of some steps of the method 800, or parts thereof, to vehicle-carried processing resources - as exemplified by the processing circuitry 962 - by transmitting a corresponding delegation signal D (see the sequence diagram in figure 10) to the concerned vehicle(s) 960 over a wireless interface 951 of the device and receiving a processing result message E in return.

In a first step 810 of the method 800, the current positions of all vehicles 960 are sensed. The vehicle positions may be self-reported positions represented by a signal P (see figure 10) transmitted from each vehicle 960 to the device 950. The transmission of the signal P may be event-triggered, periodic or triggered by a request (not shown) transmitted from the device 950 to the vehicles 960.

In a second step 812, a predefined objective function $J$ is obtained (e.g., it is input by an operator, received from another party, retrieved from a configuration, defined at runtime). The objective function may include at least one component representing operational cost and at least one component representing productivity. In particular, the objective function includes at least one component representing mass-dependent operational cost. The objective unction may be related to a dynamic vehicle model representing evolution with respect to path length $s_i$, in which time $t_i(s_i)$, path speed $v_i(s_i)$ and vehicle mass $m_i(s_i)$ are state variables.

In a third step 814, a first optimization problem 710 for a first objective function derived from the predefined objective function is solved, to obtain a vehicle crossing order at each MUTEX zone, wherein the first optimization problem is subject to safety constraints. Various ways of defining the first objective function have been described in earlier sections of this disclosure. The solution of the first optimization problem 710 also includes the loading/unloading amount at each loading/unloading zone, or this information can be derived from said solution. Optionally, the absorption time at each loading/unloading zone is obtained as well.

In a fourth step 816, an OCP 720 for the predefined objective function subject to the obtained vehicle crossing order at the MUTEX zones and subject to the safety constraints (and loading/unloading amounts and optionally absorption times) is solved, to obtain a control signal for each of the vehicles. The OCP is constrained by a dynamic vehicle model 721 representing evolution with respect to path length $s_i$ for each vehicle, in which time $t_i(s_i)$, path speed $v_i(s_i)$ and mass $m_i(s_i)$ are state variables.

In a fifth step 818, the control signals $u_i$ are fed to the vehicles (signal U in figure 10) for execution. The control signals may be conveyed over the wireless interface 951 of the computer system 950.

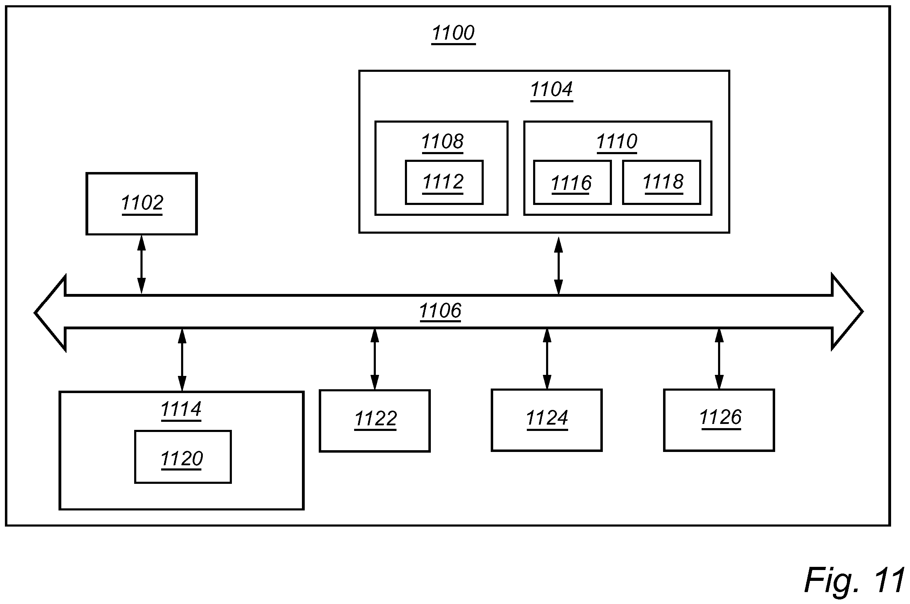

Figure 11 shows a computer system 1100 suitable for executing the route-planning method 800. The computer system 950 (figure 9) may include structures and functions of the computer system 1100 to be described.

The computer system 1100 is adapted to execute instructions from a computer-readable medium to perform these and/or any of the functions or processing described herein. The computer system 1100 may be connected (e.g., networked) to other machines in a LAN, an intranet, an extranet, or the Internet. In particular, the computer system 1100 may be connected to the processing circuitry 962 of the vehicles 960 over a vehicle-to-infrastructure (V2I), vehicle-to-vehicle (V2V) or vehicle-to-everything (V2X) connection. The connections may be supported by a cellular or non-cellular access network and associated core network. While only a single device is illustrated, the computer system 1100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1100 may comprise at least one computing device or electronic device capable of including firmware, hardware, and/or executing software instructions to implement the functionality described herein. The computer system 1100 may include processing circuitry 1102 (e.g., processing circuitry including one or more processor devices or control units), a memory 1104, and a system bus 1106. The computer system 1100 may include at least one computing device having the processing circuitry 1102. The system bus provides an interface for system components including, but not limited to, the memory 1104 and the processing circuitry 1102. The processing circuitry 1102 may include any number of hardware components for conducting data or signal processing or for executing computer code stored in memory. The processing circuitry 1102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1102 may further include computer executable code that controls operation of the programmable device.

The system bus may be any of several types of bus structures that may further interconnect to a memory bus (with or without a memory controller), a peripheral bus, and/or a local bus using any of a variety of bus architectures. The memory may be one or more devices for storing data and/or computer code for completing or facilitating methods described herein. The memory may include database components, object code components, script components, or other types of information structure for supporting the various activities herein. Any distributed or local memory device may be utilized with the systems and methods of this description. The memory may be communicably connected to the processing circuitry 1102 (e.g., via a circuit or any other wired, wireless, or network connection) and may include computer code for executing one or more processes described herein. The memory 1104 may include non-volatile memory 1108 (e.g., read-only memory (ROM), erasable programmable read-only memory (EPROM), electrically erasable programmable read-only memory (EEPROM), etc.), and volatile memory 1110 (e.g., random-access memory (RAM)), or any other medium which can be used to carry or store desired program code in the form of machine-executable instructions or data structures and which can be accessed by a computer or other machine with processing circuitry 1102. A basic input/output system (BIOS) 1112 may be stored in the non-volatile memory 1108 and can include the basic routines that help to transfer information between elements within the computer system 1100.

The computer system 1100 may further include or be coupled to a non-transitory computer-readable storage medium such as the storage device 1114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1114 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1114 and/or in the volatile memory 1110, which may include an operating system 1116 and/or one or more program modules 1118. All or a portion of the examples disclosed herein may be implemented as a computer program 1120 stored on a transitory or non-transitory computer-usable or computer-readable storage medium (e.g., single medium or multiple media), such as the storage device 1114, which includes complex programming instructions (e.g., complex computer-readable program code) to cause the processing circuitry 1102 to carry out actions described herein. Thus, the computer-readable program code of the computer program 1120 can comprise software instructions for implementing the functionality of the examples described herein when executed by the processing circuitry 1102. In some examples, the storage device may be a computer program product (e.g., readable storage medium) storing the computer program thereon, where at least a portion of a computer program may be loadable (e.g., into a processor) for implementing the functionality of the examples described herein when executed by the processing circuitry 1102. The processing circuitry 1102 may serve as a controller or control system for the computer system 1100 that is to implement the functionality described herein.

The computer system 1100 may include an input device interface 1122 configured to receive input and selections to be communicated to the computer system 1100 when executing instructions, such as from a keyboard, mouse, touch-sensitive surface, etc. Such input devices may be connected to the processing circuitry 1102 through the input device interface coupled to the system bus but can be connected through other interfaces, such as a parallel port, an Institute of Electrical and Electronic Engineers (IEEE) 1394 serial port, a Universal Serial Bus (USB) port, an IR interface, and the like. The computer system 1100 may include an output device interface 1124 configured to forward output, such as to a display, a video display unit (e.g., a liquid crystal display (LCD) or a cathode ray tube (CRT)). The computer system 1100 may include a communications interface 1126 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Further developments**

To model battery-powered vehicles, including BEVs, the above-discussed dynamic vehicle models (D), (D') can be further extended by adding a variable related to battery state of charge. The variable may for example be a total charge of the battery, a total energy of the battery, a voltage of the battery, a state-of-charge (SoC) of the battery. The equations governing the dynamics of the states may then be extended with a model for the consumption of battery energy as the vehicle moves or accelerates, possibly with a dependence on temperature and other environmental conditions, and charging during regenerative braking. Furthermore, the site where the vehicle operates may include one or more charging stations - similar to the loading stations discussed above - such that the dynamic model may include equations describing at what rate the state of charge can be increased.

By including the battery state in the dynamic model, the optimization solver makes provision for the necessity to charge vehicles while they carry out a transport mission. By integrating battery charging in the route planning algorithm, the charging can be carried out while disrupting and disturbing the transport mission minimally.

In another further development, the loading, unloading and transportation of multiple types of cargo is modeled, such as a first, second and third types of cargo. The dynamic vehicle model then includes state variables corresponding to the respective amounts of the first, second and third types of cargo currently carried by the vehicle. Dynamic computations will then assume that the inertia of the $i^{th}$ vehicle at position $s_i$ corresponds to a total mass of:

$$m_i(s_i) = m_i^{(0)} + \sum_{k \geq 1} m_i^{(k)}(s_i),$$

where $m_i^{(0)}$ is the (constant) mass of the empty vehicle and $m_i^{(k)}(s_i)$ is the current load of the $k$th type of cargo.

## Closing remarks

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A computer system (1100) for planning routes for a plurality of vehicles (960) operating in a common environment (900) which includes a plurality of mutual exclusion zones, MUTEX zones (910, 920, 930), wherein movements of each vehicle are controllable by a control signal,
the computer system comprising processing circuitry (1102) configured to:

   obtain a predefined objective function;
   solve a first optimization problem (710) for a first objective function derived from the predefined objective function, to obtain a vehicle crossing order at each MUTEX zone, wherein the first optimization problem is subject to safety constraints; and
   solve an optimal-control problem, OCP (720) for the predefined objective function subject to the obtained vehicle crossing order at the MUTEX zones and subject to the safety constraints, to obtain a control signal for each of the vehicles,
   **characterized in that** at least some of the vehicles are loadable, and
   **in that** the OCP is constrained by a dynamic vehicle model (721) representing evolution with respect to path length ($s_i$) for each vehicle, in which time ($t_i(s_i)$), path speed ($v_i(s_i)$) and mass ($m_i(s_i)$) are state variables.

2. The computer system of claim 1, wherein the MUTEX zones include at least one loading zone and at least one unloading zone.

3. The computer system of claim 2, wherein a safety constraint for each loading/unloading zone includes a mutual exclusion requirement.

4. The computer system of claim 2 or 3, wherein a loading/unloading amount at each loading/unloading zone is a decision variable of the first optimization problem.

5. The computer system of any of claims 2 to 4, wherein an absorption time at each loading/unloading zone is a decision variable of the first optimization problem.

6. The computer system of claim 4 or 5, wherein the OCP is constrained by the loading/unloading amount and/or the absorption time per loading/unloading zone decided by the first optimization problem.

7. The computer system of any of the preceding claims, wherein the predefined objective function includes at least one component representing operational cost and at least one component representing productivity.

8. The computer system of claim 7, wherein the predefined objective function includes at least one component representing mass-dependent operational cost.

9. The computer system of any of the preceding claims, wherein the first objective function is a parametric local optimum of the predefined objective function, wherein the parametric local optimum is parametrized by tentative MUTEX entry and MUTEX exit times, wherein the tentative MUTEX entry and MUTEX exit times are decision variables in the first optimization problem.

10. The computer system of any of the preceding claims, wherein the first objective function is a quadratic approximation of the predefined objective function, wherein pairwise relative vehicle crossing orders (b) as well as a state trajectory and control signal for each of the vehicles (W) are decision variables of the first optimization problem.

11. The computer system of any of the preceding claims, wherein the MUTEX zones include at least one of: an intersection zone (910), a dwelling zone (920), a merge-split zone (930),
   wherein a safety constraint for an intersection zone or a dwelling zone includes a mutual exclusion requirement, and wherein a safety constraint for a merge-split zone includes a minimum longitudinal spacing requirement.

12. The computer system of any of the preceding claims, wherein each loadable vehicle has a payload of at least 20% of its gross weight, such as at least 30% of its gross weight, such as at least 40% of its gross weight, such as at least 50% of its gross weight.

13. The computer system of any of the preceding claims, wherein the OCP (720) is a model-predictive control, MPC, problem.

14. The computer system of any of the preceding claims, wherein the first optimization problem (710) is solved as a mixed-integer quadratic program, MIQP.

15. The computer system of any of the preceding claims, wherein the common environment (900) is a confined area with no other traffic participants than said vehicles.

16. The computer system of any of the preceding claims, wherein:

   at least some of the vehicles are battery electric vehicles, BEVs; and
   the dynamic vehicle model (721), which constrains the OCP (720), further has a variable related to battery state of charge as a state variable.

17. A vehicle (400, 402; 930) comprising the computer system of any of claims 1 to 16.

18. A computer-implemented method (800) of planning routes for a plurality of vehicles (960) operating in a common environment (900) which includes a plurality of mutual exclusion zones, MUTEX zones (910, 920, 930), wherein movements of each vehicle are controllable by a control signal, comprising:

   obtaining (812), by processing circuitry of a computer system, a predefined objective function;

solving (814), by the processing circuitry, a first optimization problem (710) for a first objective function derived from the predefined objective function, to obtain a vehicle crossing order at each MUTEX zone, wherein the first optimization problem is subject to safety constraints; and

solving (816), by the processing circuitry, an optimal-control problem, OCP (720) for the predefined objective function subject to the obtained vehicle crossing order at the MUTEX zones and subject to the safety constraints, to obtain a control signal for each of the vehicles,

**characterized in that** at least some of the vehicles are loadable, and

**in that** the OCP is constrained by a dynamic vehicle model (721) representing evolution with respect to path length ($s_i$) for each vehicle, in which time ($t_i(s_i)$), path speed ($v_i(s_i)$) and mass ($m_i(s_i)$) are state variables.

19. A computer program product (1114) comprising program code (1120) for performing, when executed by processing circuitry (1102), the method (800) of claim 18.

20. A non-transitory computer-readable storage medium comprising instructions, which when executed by processing circuitry (1102), cause the processing circuitry to perform the method (800) of claim 18.

**Amended claims in accordance with Rule 137(2) EPC.**

1. A computer system (1100) for planning routes for a plurality of vehicles (960) operating in a common environment (900) which includes a plurality of mutual exclusion zones, MUTEX zones (910, 920, 930), wherein movements of each vehicle are controllable by a control signal,
   the computer system comprising processing circuitry (1102) configured to:

   obtain a predefined objective function;
   solve a first optimization problem (710) for a first objective function derived from the predefined objective function, to obtain a vehicle crossing order at each MUTEX zone, wherein the first optimization problem is subject to safety constraints; and
   solve an optimal-control problem, OCP (720) for the predefined objective function subject to the obtained vehicle crossing order at the MUTEX zones and subject to the safety constraints, to obtain a control signal for each of the vehicles,
   feed the control signals to the respective vehicles for execution,
   **characterized in that** at least some of the vehicles are loadable, and
   **in that** the OCP is constrained by a dynamic vehicle model (721) representing evolution with respect to path length ($s_i$) for each vehicle, in which time ($t_i(s_i)$), path speed ($v_i(s_i)$) and mass ($m_i(s_i)$) are state variables.

2. The computer system of claim 1, wherein the MUTEX zones include at least one loading zone and at least one unloading zone.

3. The computer system of claim 2, wherein a safety constraint for each loading/unloading zone includes a mutual exclusion requirement.

4. The computer system of claim 2 or 3, wherein a loading/unloading amount at each loading/unloading zone is a decision variable of the first optimization problem.

5. The computer system of any of claims 2 to 4, wherein an absorption time at each loading/unloading zone is a decision variable of the first optimization problem.

6. The computer system of claim 4 or 5, wherein the OCP is constrained by the loading/unloading amount and/or the absorption time per loading/unloading zone decided by the first optimization problem.

7. The computer system of any of the preceding claims, wherein the predefined objective function includes at least one component representing operational cost and at least one component representing productivity.

8. The computer system of claim 7, wherein the predefined objective function includes at least one component representing mass-dependent operational cost.

9. The computer system of any of the preceding claims, wherein the first objective function is a parametric local optimum of the predefined objective function, wherein the parametric local optimum is parametrized by tentative MUTEX entry and MUTEX exit times, wherein the tentative MUTEX entry and MUTEX exit times are decision variables in the first optimization problem.

10. The computer system of any of the preceding claims, wherein the first objective function is a quadratic approximation of the predefined objective function, wherein pairwise relative vehicle crossing orders (b) as well as a state trajectory and control signal for each of the vehicles (W) are decision variables of the first optimization problem.

11. The computer system of any of the preceding claims, wherein the MUTEX zones include at least one of: an intersection zone (910), a dwelling zone (920), a merge-split zone (930),
wherein a safety constraint for an intersection zone or a dwelling zone includes a mutual exclusion requirement, and wherein a safety constraint for a merge-split zone includes a minimum longitudinal spacing requirement.

12. The computer system of any of the preceding claims, wherein the OCP (720) is a model-predictive control, MPC, problem.

13. The computer system of any of the preceding claims, wherein the first optimization problem (710) is solved as a mixed-integer quadratic program, MIQP.

14. The computer system of any of the preceding claims, wherein the common environment (900) is a confined area with no other traffic participants than said vehicles.

15. The computer system of any of the preceding claims, wherein:

   at least some of the vehicles are battery electric vehicles, BEVs; and
   the dynamic vehicle model (721), which constrains the OCP (720), further has a variable related to battery state of charge as a state variable.

16. A computer-implemented method (800) of planning routes for a plurality of vehicles (960) operating in a common environment (900) which includes a plurality of mutual exclusion zones, MUTEX zones (910, 920, 930), wherein movements of each vehicle are controllable by a control signal, comprising:

   obtaining (812), by processing circuitry of a computer system, a predefined objective function;
   solving (814), by the processing circuitry, a first optimization problem (710) for a first objective function derived from the predefined objective function, to obtain a vehicle crossing order at each MUTEX zone, wherein the first optimization problem is subject to safety constraints; and
   solving (816), by the processing circuitry, an optimal-control problem, OCP (720) for the predefined objective function subject to the obtained vehicle crossing order at the MUTEX zones and subject to the safety constraints, to obtain a control signal for each of the vehicles,
   feeding (818) the control signals to the respective vehicles for execution,
   **characterized in that** at least some of the vehicles are loadable, and
   **in that** the OCP is constrained by a dynamic vehicle model (721) representing evolution with respect to path length ($s_i$) for each vehicle, in which time ($t_i(s_i)$), path speed ($v_i(s_i)$) and mass ($m_i(s_i)$) are state variables.

17. A computer program product (1114) comprising program code (1120) for performing, when executed by processing circuitry (1102), the method (800) of claim 16.

EP 4 625 279 A1

Fig. 1A

Fig. 1B

Fig. 1C

Fig. 2

Fig. 3

400

402

Fig. 4

*Fig. 5*

*Fig. 6*

Predef. obj. function

First obj. function

730

Vehicles

Environment

MIQP

710

Crossing order

Load/unload amounts

OCP

Vehicle model

720    721

Control signal

**Fig. 7**

800

810

812

814

816

818

**Fig. 8**

Fig. 9

950                            960

P

D

E

U

*Fig. 10*

Fig. 11

Europäisches
Patentamt

European
Patent Office

Office européen
des brevets

## EUROPEAN SEARCH REPORT

**Application Number**

EP 24 16 6979

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 4 198 670 A1 (VOLVO AUTONOMOUS SOLUTIONS AB [SE]) 21 June 2023 (2023-06-21) * abstract * * paragraph [0001] - paragraph [0022] * * paragraph [0088] - paragraph [0098] * - - - - - | 1-16,18 | INV. G06Q10/047 B60W60/00 G06Q50/40 G08G1/00 |
| X,P | KOJCHEV STEFAN ET AL: "Combined Path and Trajectory Planning for Energy-Efficient Coordination of Automated Vehicles in Confined Areas", 2024 EUROPEAN CONTROL CONFERENCE (ECC), EUCA, 25 June 2024 (2024-06-25), pages 3754-3761, XP034645628, DOI: 10.23919/ECC64448.2024.10591094 [retrieved on 2024-07-24] * the whole document * - - - - - | 1-16,18 | |

**TECHNICAL FIELDS SEARCHED (IPC)**

G06Q
B60W
G08G

The present search report has been drawn up for all claims

| Place of search | Date of completion of the search | Examiner |
|---|---|---|
| Munich | 21 November 2024 | Chauvet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 16 6979

---

## CLAIMS INCURRING FEES

The present European patent application comprised at the time of filing claims for which payment was due.

[X] Only part of the claims have been paid within the prescribed time limit. The present European search report has been drawn up for those claims for which no payment was due and for those claims for which claims fees have been paid, namely claim(s):

16, 18

[ ] No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

[ ] All further search fees have been paid within the fixed time limit. The present European search report has been drawn up for all claims.

[ ] As all searchable claims could be searched without effort justifying an additional fee, the Search Division did not invite payment of any additional fee.

[ ] Only part of the further search fees have been paid within the fixed time limit. The present European search report has been drawn up for those parts of the European patent application which relate to the inventions in respect of which search fees have been paid, namely claims:

[ ] None of the further search fees have been paid within the fixed time limit. The present European search report has been drawn up for those parts of the European patent application which relate to the invention first mentioned in the claims, namely claims:

[ ] The present supplementary European search report has been drawn up for those parts of the European patent application which relate to the invention first mentioned in the claims (Rule 164 (1) EPC).

## ANNEX TO THE EUROPEAN SEARCH REPORT
## ON EUROPEAN PATENT APPLICATION NO.

EP 24 16 6979

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | Publication date | Patent family member(s) | Publication date |
|---|---|---|---|
| EP 4198670 A1 | 21-06-2023 | AU 2022241466 A1 | 18-05-2023 |
| | | CN 116090680 A | 09-05-2023 |
| | | EP 4198670 A1 | 21-06-2023 |
| | | US 2023134026 A1 | 04-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023072418 A1

- EP 4198670 A1

**Non-patent literature cited in the description**

- **J. NOCEDAL et al.** Numerical optimization. Springer Science & Business Media, 2006

- **KOJCHEV et al.** A Two-Stage MIQP-Based Optimization Approach for Coordinating Automated Electric Vehicles in Confined Sites. *IEEE Transactions on Intelligent Transportation Systems*, 2024, vol. 25 (2)